## Europäisches Patentamt
## European Patent Office
## Office européen des brevets

(19)

(11) Veröffentlichungsnummer: **0 267 975 B1**

(12) **EUROPÄISCHE PATENTSCHRIFT**

(45) Veröffentlichungstag der Patentschrift: **08.05.91**

(51) Int. Cl.⁵: **B01J 8/00, B01J 2/16**

(21) Anmeldenummer: **86115820.2**

(22) Anmeldetag: **14.11.86**

(54) **Verfahren zur kontinuierlichen Herstellung von Granulaten aus einem Feststoff in einem fluidisierten Gutbett.**

(43) Veröffentlichungstag der Anmeldung:
**25.05.88 Patentblatt 88/21**

(45) Bekanntmachung des Hinweises auf die Patenterteilung:
**08.05.91 Patentblatt 91/19**

(84) Benannte Vertragsstaaten:
**AT BE CH ES FR GB IT LI LU NL SE**

(56) Entgegenhaltungen:
**DE-A- 2 231 445**
**DE-A- 2 908 136**
**GB-A- 2 084 044**
**SU-C- 714 122**

(73) Patentinhaber: **Alpine Aktiengesellschaft**
**Peter-Dörfler-Strasse 13-25**
**W-8900 Augsburg 22(DE)**

(72) Erfinder: **Nied, Roland, Dr.-Ing.**
**Raiffeisenstrasse 10**
**W-8901 Bonstetten(DE)**
Erfinder: **Hackl, Herbert, Dipl.-Ing. (FH)**
**Am Grünland 15**
**W-8900 Augsburg(DE)**

EP 0 267 975 B1

**Beschreibung**

Die Erfindung bezieht sich auf ein Verfahren zur kontinuierlichen Herstellung von Granulaten aus einem Feststoff in einem fluidisierten Gutbett gemäß Oberbegriff von Anspruch 1.

Die wesentlichen Merkmale eines solchen Verfahrens bestehen darin, daß man den zu granulierenden Feststoff in Form einer Lösung oder Suspension in oder auf das, aus vorgranuliertem Feststoff bestehende, durch ein eingeleitetes Trocknungsgas geeigneter Temperatur fluidisierte Gutbett sprüht und eine entsprechende Menge fertige Granulate aus dem Gutbett austrägt und getrennt davon das Trocknungsgas zusammen mit dem entstandenen Wasserdampf abzieht. Unterschiedliche Ausführungsformen von Apparaten zur Durchführung dieses Verfahrensprinzips sind beispielsweise in der GB-A 1 026 329, der US-A 3 376 124, der DE-C 29 08 136 oder der DE-A 30 43 440 beschrieben.

Dieses Verfahren liefert zufriedenstellende Ergebnisse, solange relativ große Granulatkörner erzeugt werden. Zur Fluidisierung des Gutbettes kann dabei mit entsprechend hohen Strömungsgeschwindigkeiten des Trocknungsgases gearbeitet werden, so daß das Verhältnis von Durchsatz und Apparategröße in technisch vertretbaren Grenzen gehalten werden kann.

Bei der Herstellung von Mikrogranulaten, die in zunehmendem Maße von der Industrie verlangt werden, ergeben sich jedoch Schwierigkeiten. Da sich in diesem Fall eine Fluidisierung des Gutbettes schon bei sehr geringen Strömungsgeschwindigkeiten des Trocknungsgases einstellt, kann entweder mit einem Apparat gegebener Größe nur ein Bruchteil der Ausbeute an großen Granulatkörnern erzielt werden, oder es muß ein erheblicher größerer Apparat eingesetzt werden, der aber den Nachteil hat, daß sich praktisch kein gleichmäßiges Fließbett erzeugen läßt; erfahrungsgemäß tritt dabei immer Blasenbildung in eng umgrenzten Bereichen auf, die das übrige Fließbett zusammenbrechen läßt.

Diesen Schwierigkeiten sucht ein aus der DE-OS 22 31 445 bekanntes Verfahren der eingangs geschilderten Art dadurch zu begegnen, daß die zusammen mit dem Trocknungsgas und dem entstandenen Wasserdampf ausgetragenen Granulate mit einem Schlauchfilter aufgefangen und in das fluidisierte Gutbett zurückgeleitet werden. Aber auch hier bleibt der zulässige Bereich für die Strömungsgeschwindigkeit des Trocknungsgases sehr eng, da bei zu hoher Strömungsgeschwindigkeit vor allem die kleinsten Granulatkörner nicht mehr in das Gutbett zurückfallen, sondern sich an den Filterschläuchen festsetzen, so daß selbst bei rückspülbaren Filterschläuchen ein kontinuierlicher Betrieb erschwert, wenn nicht gar unmöglich wird.

Aufgabe der Erfindung ist es daher, das bekannte Verfahren zum kontinuierlichen Herstellen eines Feststoff-Granulats soweit zu verbessern, daß eine von der Strömungsgeschwindigkeit des Trocknungsgases unabhängige Betriebsweise möglich wird.

Die Lösung dieser Aufgabe besteht darin, daß man die zusammen mit dem Trocknungsgas und dem Wasserdampf aus dem Gutbett ausgetragenen Granulate laufend einer Fliehkraftsichtung unterzieht, wobei das Gemisch aus Trocknungsgas und Wasserdampf als Trägergas bei der Sichtung dient.

Dadurch wird erreicht, daß der Korndurchmesser der ausgetragenen Granulatkörner nicht mehr von der Strömungsgeschwindigkeit des Trocknungsgases abhängt, sondern nur von den Parametern der Sichtung. Außerdem stellt sich ein verstärkter innerer Umlauf der Granulatkörner ein, die dadurch häufiger in den Strahl der eingesprühten Lösung oder Suspension gelangen und somit das Wachstum ihrer Korngröße schneller vor sich geht, als bei einem äußeren Umlauf, z. B. über Filter oder Zyklon. Die auftretende Gut-Trägergas-Konzentration darf dabei sehr hoch sein. Beispielsweise ist nach Erfahrung des Erfinders selbst bei einem Verhältnis von 3 kg Gut je m³ Trägergas ein Betrieb ohne Beeinträchtigung der Sichtfunktion möglich.

Von Vorteil ist es auch, daß die Trenngrenze der Fliehkraftsichtung einstellbar gemacht werden kann, so daß damit der Korndurchmesser der vom Trocknungsgas ausgetragenen Granulatkörner unabhängig von der Menge des Trocknungsgases festgelegt bzw. die ausgetragene Menge an Granulat geregelt werden kann. Dadurch ist es möglich, daß in den meisten Fällen das sonst notwendigerweise geregelte Einbringen von Keimen eingespart werden kann, vor allem dann, wenn die Trenngrenze der Fliehkraftsichtung auf eine Korngröße eingestellt wird, die kleiner ist, als die Korngröße der zur Granulatbildung erforderlichen Keime.

Zur Durchführung der Sichtung ist an sich jede nach dem Fliehkraftprinzip arbeitende Sichtvorrichtung geeignet. Besonders vorteilhaft ist jedoch die Verwendung eines um eine z. B. horizontale Achse umlaufenden Sichtrades mit gleichmäßig an seinem Umfang verteilten Schaufeln, das entgegen seiner Schleuderwirkung von außen nach innen von dem Trocknungsgas und dem Wasserdampf durchströmt wird. Es hat sich nämlich gezeigt, daß diese Sichtvorrichtung selbst bei der hohen Gutkonzentration des erfindungsgemäßen Verfahrens erstaunlich stabil arbeitet, d. h. die einmal eingestellte Trenngrenze unabhängig von Menge und Kornverteilung des zur Sichtung angebotenen Gutes festhält.

Diese Vorrichtung besteht aus einem vertikalachsigen, zylindrischen Behälter 1 mit trichterförmigem Boden 2, dessen unterster Teil im Bereich einer den Boden 2 umfassenden Kammer 3 für die Zuführung des Trocknungsgases aus Siebblech gefertigt ist. An der tiefsten Stelle des Bodens 2 ist eine Sprühdüse 4 mit nach oben gerichteter Mündung angeordnet. Oben ist Behälter 1 durch einen Aufsatz 5 abgeschlossen, der ein Sichtrad 6 mit horizontaler Rotationsachse 7 trägt. Dieses Sichtrad in Form eines Schaufelrades mit einer Vielzahl schmaler, radial oder schräg zum Sichtradumfang verlaufender Schaufeln 8 sitzt auf der Welle 9, die in einem seitlich am Aufsatz 5 befestigten Lagergehäuse 10 gelagert ist und über die Riemenscheibe 11 von einem hier nicht dargestellten Motor angetrieben wird. Der Raum innerhalb der Schaufeln 8 des Sichtrades 6 mündet in das doppelwandige Rohr 12, vom dem eine hier nicht näher dargestellte Rohrleitung 13 zum Schlauchfilter 14 führt.

Wirkungsweise: Behälter 1 wird vor dem Anfahren durch die Aufgabevorrichtung 15 mit vorgranuliertem Feststoff bis zu einer bestimmten Höhe gefüllt. Trocknungsgas geeigneter Temperatur, das bei 16 in die Kammer 3 eingeleitet wird, tritt durch den gelochten Teil des Bodens 2 in den Behälter 1, durchströmt das Gutbett von unten nach oben und fluidisiert es dabei. Der Grad der Fluidisierung wird im wesentlichen durch die Störmungsgeschwindigkeit des Gases bestimmt.

Durch die als Zweistoff-Düse ausgebildete Sprühdüse 4 wird die Lösung oder Suspension des zu granulierenden Feststoffes und gleichzeitig Druckluft eingeführt, durch die die Flüssigkeit in feinste Tröpfchen aufgeteilt wird. Die hohe Austrittsgeschwindigkeit der Druckluft aus der Sprühdüse bewirkt ein Aufbrechen der fluidisierten Schüttung, so daß eine stark ausgeprägte Fontäne entsteht, in der die besprühten feuchten Granulatkörner nach oben transportiert werden, bis diese ihre von ihrer Größe abhängigen Endsteighöhe erreicht haben. Nach Richtungsumkehr im Scheitelpunkt fallen die Granulatkörner nun gegen das nach oben strömende Trocknungsgas am äußeren Umfang des Behälters 1 in das Fließbett zurück, wobei sie bereits zu diesem Zeitpunkt durch entsprechende Vorgabe der Betriebsparameter so weit abgetrocknet sind, daß sie beim Zusammentreffen mit anderen Granulatkörnern nicht verklumpen. Das durch die Wasserdampf-Aufnahme abgekühlte Trocknungsgas und die entspannte Druckluft durchströmen den Schaufelkranz des rotierenden Sichtrades 6 von außen nach innen, wobei die Schleuderwirkung des Sichtrades verhindert, daß Granulatkörner oberhalb einer bestimmten Korngröße ebenfalls ausgetragen werden. Diese als Trenngrenze des Sichters bezeichnete Korngröße ist also von der Menge des Trägergases (hier Trocknungsgas, Wasserdampf und Druckluft ) und der Drehzahl des Sichtrades abhängig, so daß bei vorgegebener Gasmenge durch Änderung der Sichtrad-Drehzahl diese Korngröße geändert werden kann.

Über Rohrleitung 13 gelangen Trägergas und ausgetragenes Feinstkorn zum Schlauchfilter 14 (hier könnte u. U. auch ein Zyklon eingesetzt werden), wo das Feinstkorn aus dem Trägergas abgeschieden wird. Je nach Anwendungsfall und/oder Beschaffenheit des Feinstkorns kann dieses verworfen oder als Keimpartikel in den Behälter 1 zurückgeführt werden. Ein Teil des im Behälter 1 zurückfallenden Granulatstroms wird kontinuierlich durch die Austragsleitung 17 abgezogen und auf einer (nicht dargestellten) Siebmaschine in Fertiggut (Siebüberlauf) und Rücklaufgut (Siebdurchgang) getrennt und letzteres durch die Aufgabevorrichtung 15 (gegebenenfalls zusammen mit dem Feinstkorn vom Schlauchfilter 14) in den Behälter 1 zurückgeführt. Bei 18 wird Druckluft, in die äußere Kammer des Rohres 12 eingeleitet, die durch Öffnungen in der Strirnseite des Rohres 12 in den Spalt zwischen Rohr 12 und Sichtrad 6 eintritt und durch hohe Strömungsgeschwindigkeit in radialer Richtung nach innen und außen ein Eindringen von Gut in den Spalt verhindert.

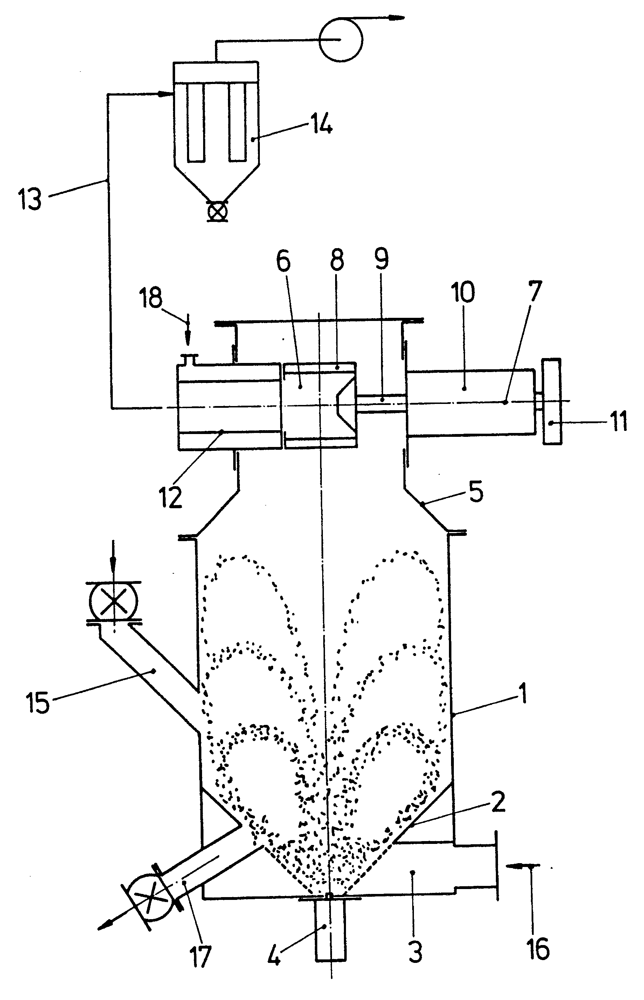

## Ansprüche

1. Verfahren zur kontinuierlichen Herstellung von Granulaten aus einem Feststoff in einem fluidisierten Gutbett, wobei man den Feststoff in Form einer Lösung oder Suspension in oder auf das, aus vorgranuliertem Feststoff bestehende, durch ein eingeleitetes Trocknungsgas geeigneter Temperatur fluidisierte Gutbett sprüht und eine entsprechende Menge fertige Granulate aus dem Gutbett abzieht, sowie Granulate zusammen mit dem Trocknungsgas und dem entstandenen Wasserdampf aus dem Gutbett ausgetragen werden, dadurch **gekennzeichnet,** daß man die zusammen mit dem Trocknungsgas und dem Wasserdampf aus dem Gutbett ausgetragenen Granulate laufend einer Fliehkraftsichtung unterzieht.

2. Verfahren nach Anspruch 1, dadurch **gekennzeichnet,** daß die Trenngrenze der Fliehkraftsichtung unabhängig von der Menge des Trägergases einstellbar ist.

3. Verfahren nach Anspruch 2, dadurch **gekennzeichnet,** daß die eingestellte Trennkorngröße der Fliehkraftsichtung kleiner ist als die Korngröße der zur Granulatbildung erforderlichen Keime.

4. Verfahren nach einem der Ansprüche 1 bis 3, dadurch **gekennzeichnet,** daß man für die Fliehkraftsichtung ein an sich bekanntes, um eine Achse umlaufendes Sichtrad mit gleichmäßig an seinem Umfang verteilten Schaufeln einsetzt, welches Sichtrad entgegen seiner Schleuderwirkung von außen nach innen von dem Trocknungsgas und dem Wasserdampf durchströmt wird.

## Claims

1. A process for the continuous production of granules from a solid material in a fluidized bed by spraying the solid material in the form of a solution or suspension into or onto a bed of pregranulated solid material, which is fluidized by injecting a drying gas of suitable temperature, withdrawing an adequate quantity of finished granules from the bed of material and removing granules from the bed together with the drying gas and resultant water vapour, which process is characterized by constantly subjecting the granules removed together with the drying gas and the water vapour from the bed of material to a centrifugal force classification.

2. The process according to claim 1 wherein the effective separating size of the centrifugal force classification is adjustable independently of the quantity of gas and vapour.

3. The process according to claim 2 wherein the effective separating size of the centrifugal force classification being set is smaller than the requisite size of the seed grains for forming the granules.

4. The process according to any one of the claims 1 to 3 wherein a per se known classifying wheel having a plurality of blades positioned about its periphery is rotated around its axis to provide the centrifugal force classification by flow of the drying gas and water vapour from outside the wheel to inside the wheel.

## Revendications

1. Procédé de production en continu de granules à partir d'une matière solide dans un lit fluidisé, selon lequel on pulvérise la matière solide sous forme d'une solution ou suspension dans ou sur le lit fluidisé, de température adéquate grâce à l'introduction d'un gaz de séchage et constitué de matière solide préalablement granulée, et on soustrait du lit une quantité correspondante de granules achevés et on évacue également du lit des granules conjointement avec le gaz de séchage et la vapeur d'eau produite, caractérisé en ce qu'on soumet en continu à une séparation centrifuge les granules évacués du lit conjointement avec le gaz de séchage et la vapeur d'eau.

2. Procédé selon la revendication 1, caractérisé en ce que le calibre de grains de la séparation centrifuge peut être réglée indépendamment de la quantité de gaz porteur.

3. Procédé selon la revendication 2, caractérisé en ce que le calibre de grains réglé de la séparation centrifuge est inférieur au calibre des germes nécessaires pour la formation des granules.

4. Procédé selon l'une des revendications 1 à 3, caractérisé en ce qu'on utilise pour la séparation centrifuge une roue séparatrice en soi connue, tournant autour d'un axe et munie de pales régulièrement réparties sur sa périphérie, qui est traversée par le gaz de séchage et la vapeur d'eau en sens inverse de son action centrifuge, de l'extérieur vers l'intérieur